# EUROPEAN PATENT SPECIFICATION

(11) **EP 0 445 521 B1**
(45) Date of publication and mention of the grant of the patent: **14.06.1995**
(21) Application number: 91101167.4
(22) Date of filing: 30.01.1991
(51) Int. Cl.: B66B 11/04, H02K 7/116

(54) **Geared motor**
Getriebemotor
Moteur réducteur

(30) Priority: 07.03.1990 IT 1243890
(43) Date of publication of application: 11.09.1991
(73) Proprietor: SABIEM S.p.A., I-40133 Bologna (IT)
(72) Inventor: Bianciardi, Ettore, I-40134 Bologna (IT); Aulanko, Esko, 041230 Kerava (FI); Saransaari, Pertti, 05830 Hyvinkää (FI); Venho, Ola, 05830 Hyvinkää (FI)
(74) Representative: Porsia, Bruno

(56) References cited:
- DE-A- 2 215 426
- DE-A- 2 408 722
- FR-A- 2 297 803
- US-A- 3 455 174
- US-A- 4 688 660

## Description

The present invention relates to a geared motor, which is particularly adapted for use in a capstan device for lifts or elevators, but which may be used for any like application. The body of the geared motor according to the invention consists of two separate pieces between which also the stator of the electric motor is included and firmly clamped. The said two pieces forming the body are mutually joined like the valves of a shell and are matingly fastened to each other along an ideal vertical place containing the axis of rotation of the electric motor.

Document DE-A-2 408 722 discloses a geared motor for use in a capstan device for lifts or elevators, which comprises a speed reducer of the worm screw and worm wheel type, an electric motor for driving the said worm screw, and a fan for supplying cooling air to longitudinal ducts arranged concentrically to the stator of the said electric motor.

According to the present invention, it is proposed a geared motor of the above referred type, which further comprises, in combination, the following characterizing features:
- the speed reducer body is formed by two pieces which are matingly joined to each other along an ideal vertical plane containing the axis of the worm screw, the said pieces being integrally provided with opposed extensions which are also set in mating relation along the said ideal vertical plane and between which the stator of the electric motor is clamped;
- the longitudinal ducts for the cooling air are formed around the stator, the fan being mounted at the free end side of the said extensions, while grille openings for the outflow of the cooling air are provided in the lateral portions of the opposite end side of said extensions;
- the two pieces forming the body are provided integrally on their underside with coplanarly arranged connection members to be fastened to any suitable supporting frame.

The construction of the geared motor body in two pieces which enclose both the speed reducer and the electric motor ensures the perfect alignment of the axes of the motor and of the speed reducer. Moreover, in consideration of the fact that the body is practically a single body enclosing both the motor and the speed reducer, the flow of the cooling air reaches from the motor also the speed reducer, thus favouring also the cooling of the lubricating oil, while the additional presence of the connection members, which are obtained integrally with the two pieces forming the body, for the fastening of the geared motor to any suitable supporting structure, simplify the construction and setting in place of the geared motor itself.

The above and other features of the invention, and the advantages arising therefrom, will appear evident from the following description of one preferred embodiment, made by way of non-limiting example with reference to the attached drawings, in which:
Figure 1 is a perspective view of a capstan device incorporating a geared motor according to the invention.
Figure 2 is a sectional view of the capstan device according to Figure 1, taken through a vertical plane containing the axis of the speed-reducer-driving electric motor.
Figures 3, 4, and 5 respectively are a side elevational view, a front elevational view, and a top plan view of the body of the capstan device according to the invention.
Figure 6 is an elevational view showing the capstan device from its front side.
Figures 7 and 8 are sectional views of the capstan device body according to Figure 3, respectively taken on lines VII-VII and VIII-VIII, and showing some details of the same.
Figure 9 is an elevational sectional view taken on line IX-IX in Figure 4, showing one of the pieces constituting the capstan device body, from its inward side.
Figure 10 is a sectional view of the capstan device, taken on line X-X in Figure 2.
Figures 11 and 12 are sectional views respectively taken on line XI-XI in Figure 4 and on line XII-XII in Figure 9, and showing further constructional details of the capstan device body.

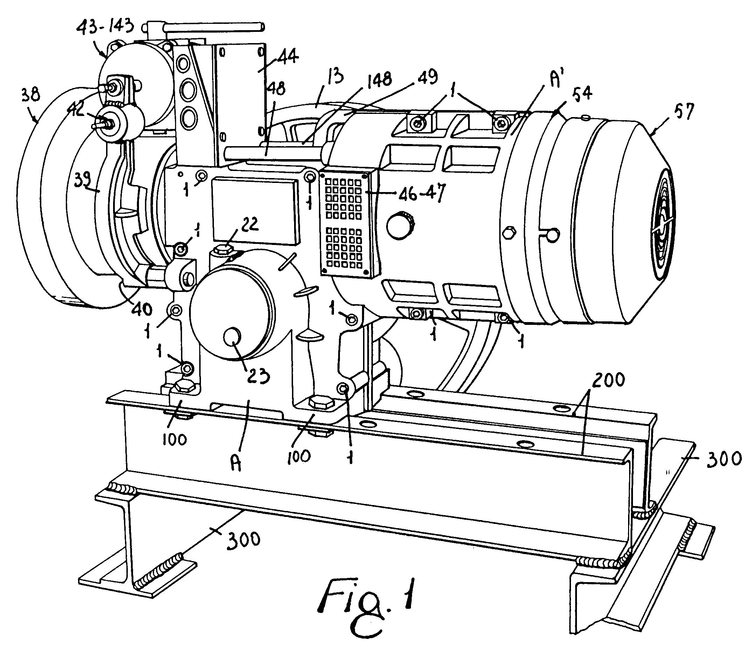

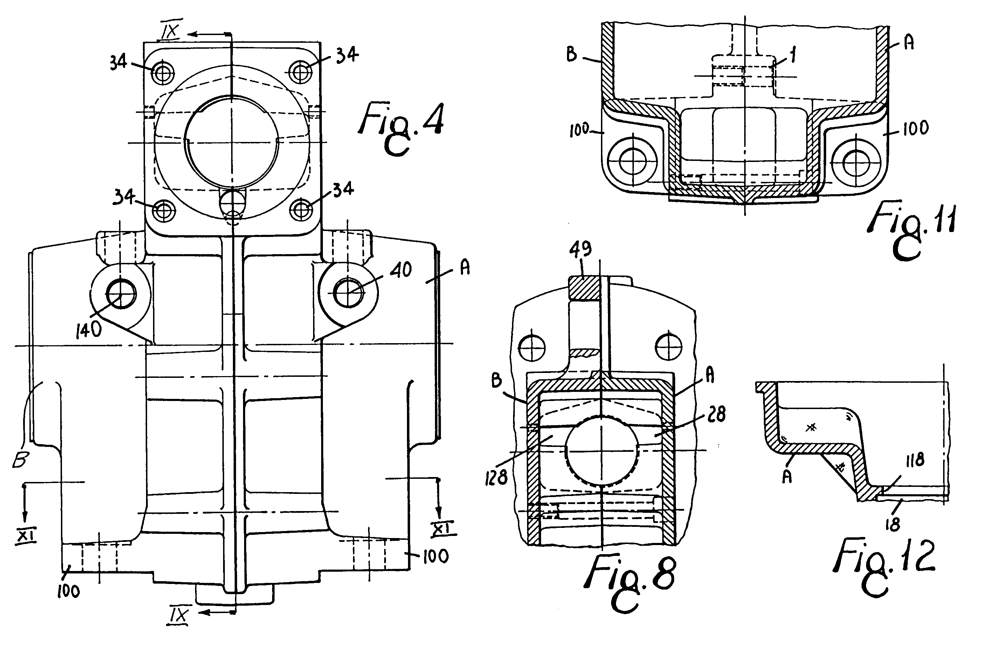

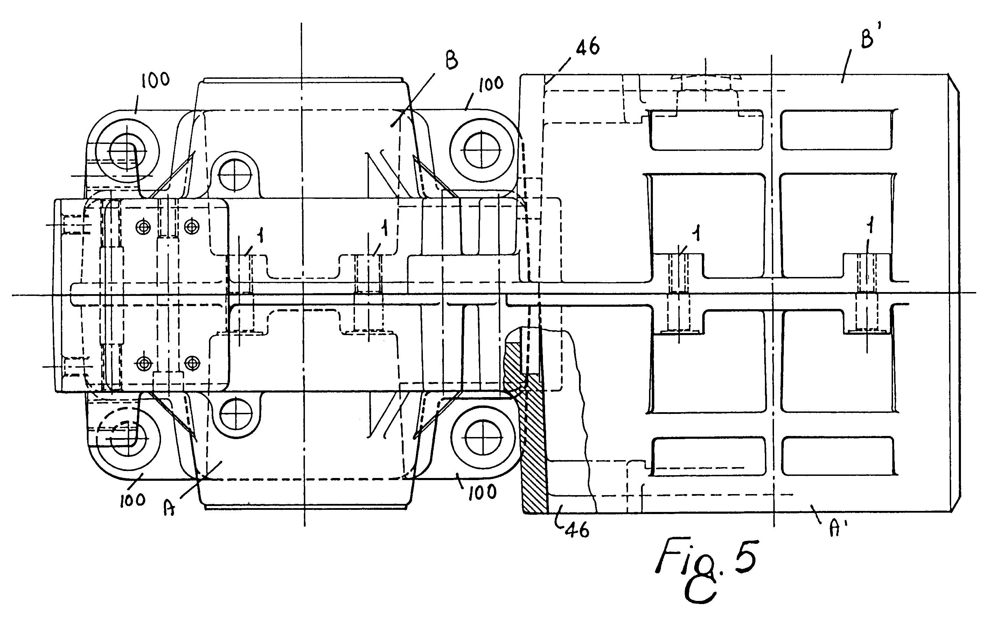

Referring first of all to Figures 1 to 7, there appears that the casptan device body consists of two complementary separate pieces A and B arranged in a mating relation in an ideal vertical plane containing the axis of the high-speed operated shaft of the speed reducer forming part of the capstan device. The pieces A and B are provided at suitably thickened portions thereof with peripheral bores 1 through which the screws for mutually securing the said pieces, are threaded. The surfaces at which the pieces A and B are set in mutual contact, are planed by a tool machine, and a sealing agent, of the silicone type for example, is laid there-over, and these surfaces are then arranged in a mating relation the one against the other, and are mutually secured by means of the said screws threaded through the peripheral bores 1.

The pieces A and B are provided under their part that defines the speed reducer body, with bored coplanar ears 100 for attaching the said body to a supporting frame consisting, for example, of a pair of parallel beams 200 which by the ends of their undersides are in turn mutually secured by means of lower crosspieces 300.

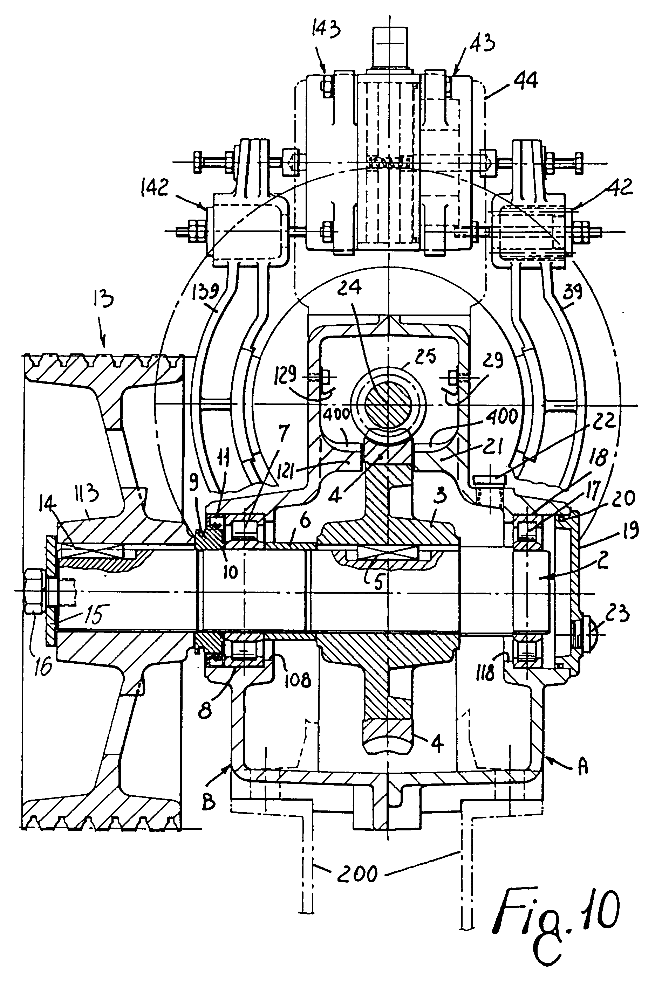

As shown in Figure 10, the slow-speed operated shaft 2 of the capstan device comprises a greater diameter section 102, on which is fitted the hub 3 carrying the helical gear 4 that is co-axially fixed thereto, the said hub being keyed onto the said shaft by means of a feather 5. At the one side of hub 3 a spacer 6 is provided, and is caused to abut against the inward peripheral edge of the inner ring of bearing 7 which is seated in the housing 8 provided in the piece B of the capstan device body. A ring 9 is caused to bear against the outward peripheral edge of the inner ring of the said bearing 7, and in the inner peripheral edge of ring 9 a housing is formed, in which an annular packing 10 for tightly sealing the shaft 2, is seated. An annular packing 11 of a type on the market, is seated in housing 8, and by its inner peripheral edge is caused to tightly seal the ring 9, whereby to prevent any lubricant outflow. The hub 113 of pulley 13 is caused to bear on the outer peripheral edge of ring 9, the said hub 113 being keyed onto the shaft 2 by means of a feather 14, and being axially locked against the above described members by means of disk 15 and screw 16.

At its opposite end, the shaft 2 is rotatably supported by the bearing 17 seated in housing 18, which is formed in the piece A of the capstan device body, and is closed by a cup-shaped member 19 provided with a seal 20.

The shaft 2 and the members which are associated therewith, are prevented from being axially shifted by the opposite sides of the helical gear 4 being caused to cooperate with opposed projecting members 21, 121 which are preferably formed of one piece with the inward sides of the pieces A and B of the capstan device body. At the time the surfaces of pieces A and B, to be set in mutual contact, are machined by a tool machine, also the surfaces of the projecting members 21, 121 which are meant for cooperating with the helical gear 4, are accurately machined. The said members 21, 121 have to be set in a mutually spaced apart relation, at such a distance between them that should be slightly greater than the thickness of the said helical gear. Since no thickness results from the sealing agent laid between the surfaces of pieces A and B, by which these pieces are fastened together, it is then possible to assume these surfaces as the intermediate plane of the spacing that must be provided between the machined surfaces of the projecting members 21, 121. If the thickness of the helical gear 4 is known, the required surface-machining of the projecting members 21, 121 can be easily carried out.

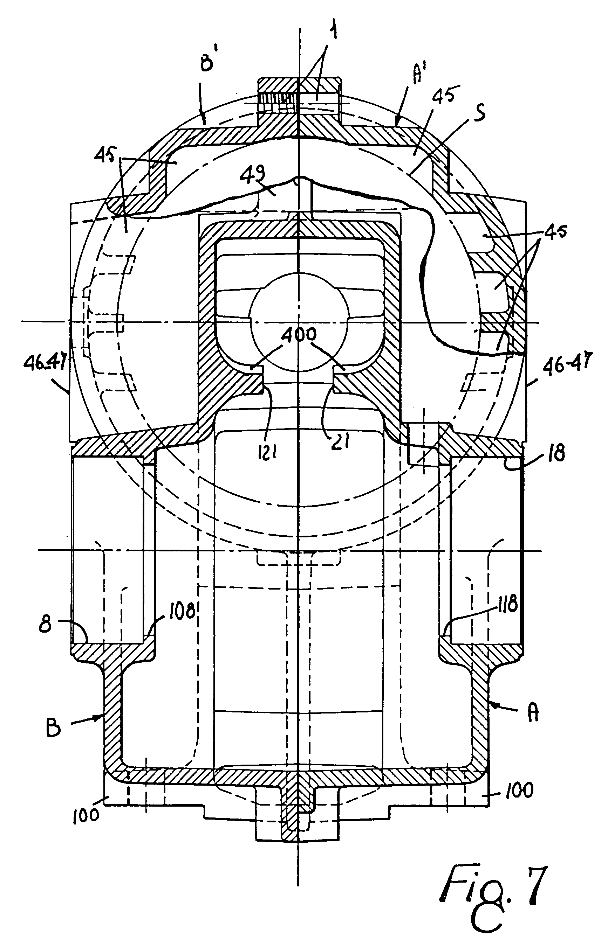

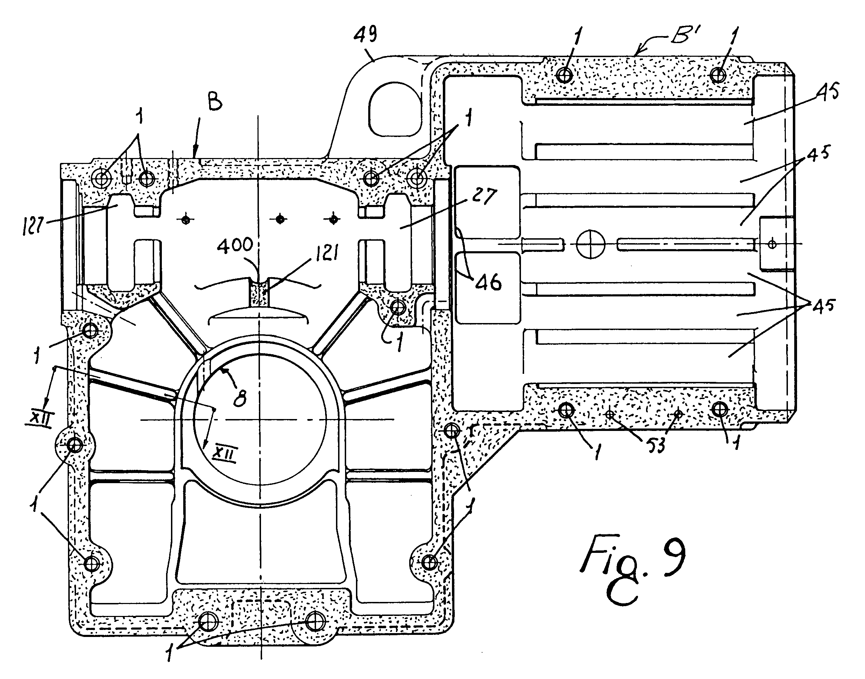

As seen in Figures 7, 9 and 10, the projecting members 21, 121 are caused to act upon the sides of that portion of the helical gear 4 which comes to be in mesh with the driving screw 25 (see hereinafter). In order to ensure that the surfaces of the projecting members 21, 121 which contact the helical gear 4, be sufficiently lubricated even with the geared motor being intermittently operated, a recess 400 is formed in the uppermost region of each projecting member 21, 121 (see Figure 9). The said recesses are closed by the helical gear 4, and some lubricating oil being transferred by the helical gear, is collected therein. When the geared motor is stopped, the oil contained in the recesses 400 slowly leaks out on the periphery of the helical gear 4, which is thus suitably lubricated at the time the geared motor will be subsequently re-actuated.

It is apparent that by the disclosed embodiment the assembly and disassembly of the slow speed-operated shaft 2 and of the members being associated therewith, is considerably simplified.

The housings 8 and 18 for the bearings (7, 17) rotatably supporting the shaft 2, may be even not formed at their inward sides with their abutment end members 108 and 118, in that it is the very shaft 2 that prevents the bearings from being undesirably displaced axially.

In Figure 10, reference numeral 22 denotes the plug for closing the port for admitting lubricating oil into the capstan device body, and reference numeral 23 denotes the plug for closing the minimum lubricant level port.

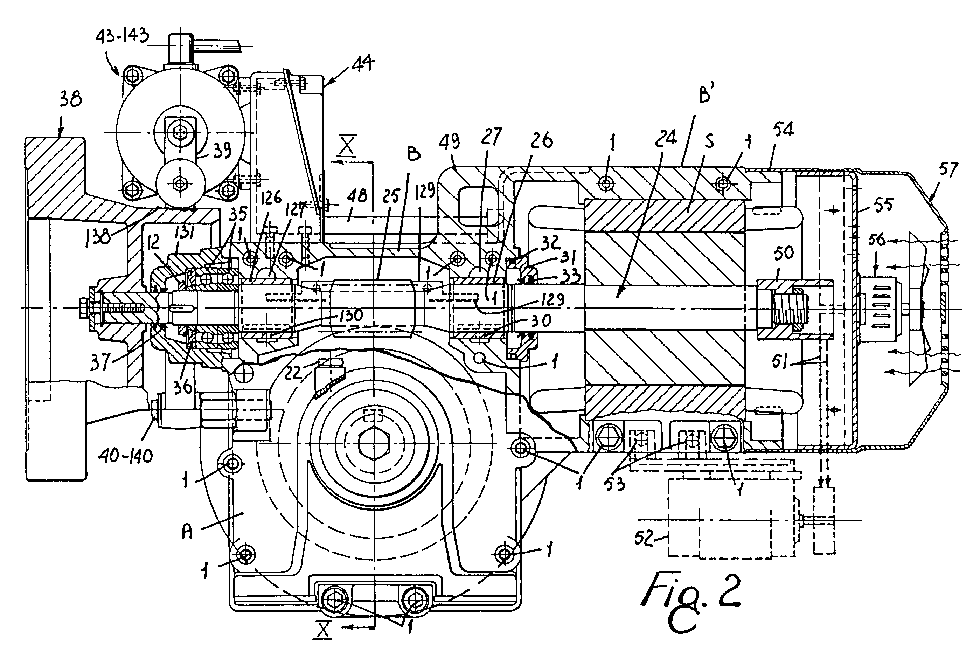

In Figure 2 there is shown that the high-speed operated shaft 24 of the capstan device comprises in its intermediate section a worm screw 25 which is caused to cooperate with the above disclosed helical gear 4. In the pieces A and B of the capstan device body two axially aligned housings- are defined, in which the bushings 26, 126 of a low friction material are seated, and rotatably support the said high-speed operated shaft 24. Referring also to Figures 8 and 9, there appears that the housings in which the said bushings are seated, have their intermediate portion formed with a respective annular recess 27, 127 which is set in communication with the interior of the speed reducer body, through a respective aperture 28, 128 in which one side end of small gutter-like members 29, 129 is respectively fitted, and is attached to the relative inward side of the said pieces A and B (see Figure 10), the said gutter-like members being provided for collecting the lubricant being transferred by a splashing action from the worm screw/helical gear unit into the said members, and for causing the lubricant to flow by gravity into the said recesses 27, 127. The bushings 26, 126 are formed with downward bores 30, 130 for allowing the lubricant to flow to the so-called scores provided in the inner surfaces of the said bushings, whereby the required lubrication is ensured of the bushing surfaces which are set in contact with shaft 24.

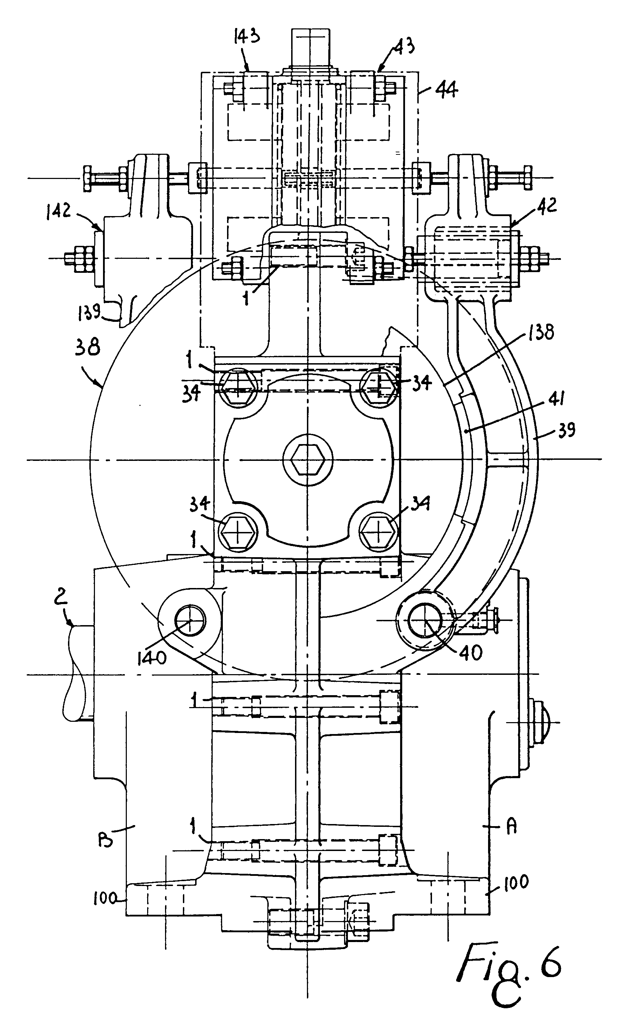

Still in Figure 2 there is shown that the housings in which the bushings 26, 126 are seated, are respectively formed at their outward end section with a greater diameter portion, in which:
- at the side that is turned toward the electric motor, a cup-shaped member 31 is housed, which is provided with seals 32 and 33 respectively received in the peripheral outer edge of its greater diameter portion and in the peripheral inner edge of its smaller diameter portion.
- at the opposite side a cup-shaped member 131 is housed, which is secured by means of screws 34 (see also Figure 6) and is caused to surround the outer ring of a pair of thrust bearings 35 with their inner ring being axially locked by a locking nut 12 to a tapered section of shaft 24. Reference numeral 36 denotes an elastic compensator which is caused to act upon the said bearings, and reference numeral 37 denotes the seals provided in the cup-shaped member 131, and acting upon the shaft 24.

A flywheel 38 is keyed onto that end of shaft 24 which lies outside of the cup-shaped member 131, and the said fly-wheel conventionally carries a drum 138 that is acted upon by a brake means comprising a pair of jaw-like members 39, 139 (see also Figures 6 and 10), which by their lower ends are pivotally connected at 40, 140 to a respective support provided in the pieces A and B of the geared motor body, the said jaw-like members being intermediately provided with braking shoes 41, 141, and being connected by their upper ends to the respective spring 42, 142 for engaging the said brake means, and to the respective electromagnet 43, 143 for releasing the same.

According to a preferred embodiment of the invention, the electromagnets 43, 143 are fitted on a box 44 (see Figure 2), which is secured to the body of the speed reducer. The terminal board for the electric circuit to the stator of the electric motor M that is associated with the said speed reducer, and the terminal board for the electric fan for cooling the motor, are placed inside the said box, as will be disclosed later on.

As shown in detail in Figure 7, the pieces A and B constituting the body of the capstan device speed reducer, are formed with opposed extended parts A' and B' which are also set in mating relation with each other in the same ideal vertical plane containing the said pieces A, B, and which are characterized by being caused to include and firmly clamp the stator S of the electric motor that drives the said capstan device, the end side of the said stator which is opposite to the speed reducer, being however left in an exposed condition.

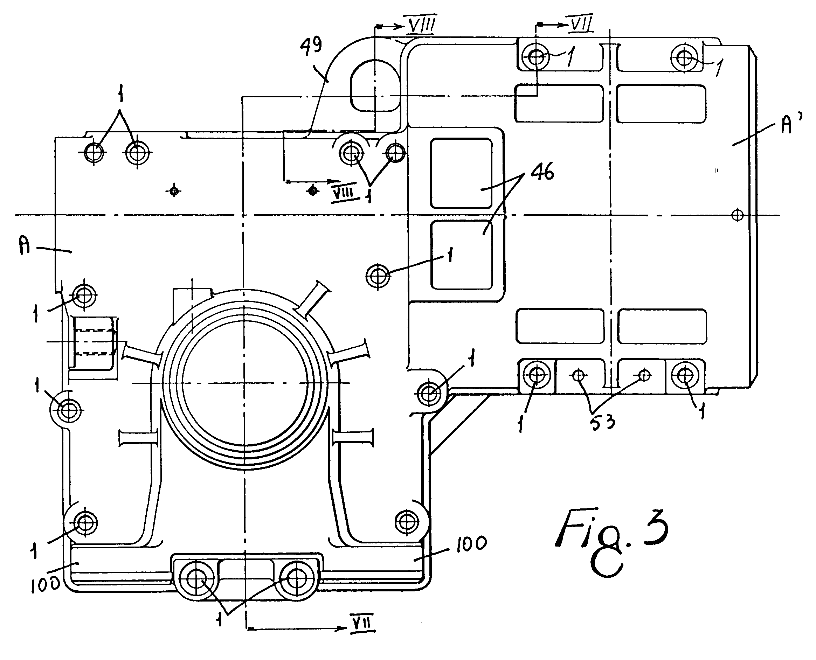

Still in Figure 7 there is shown that the inward sides of the extended parts A' and B' are formed with a succession of substantially concave portions; more particularly, the said concave portions are so formed that longitudinal ducts 45 are provided all around the stator, for the cooling air that is circulated by the electric fan as disclosed hereinafter, to flow therethrough and then thereout to the ambient atmosphere through the outlets 46 laterally provided in the extended parts A' and B' (see Figures 3, 5, and 9), the said outlets being each closed by a safety grille 47 (Figure 1). The electric cables for feeding the electric fan are also led through one of the said ducts 45, and together with the electric cables of the circuit to the stator of motor M, the former cables are led into the box 44, through bores provided in the closed end side of the extended parts A', B', and through cable-holding tubes 48, 148 (see Figures 1 and 2).

In Figures 1, 2, 3, and 9, numeral 49 denotes an eye formed of one piece with the intermediate upper portion of at least one of the pieces A, A' and B, B' constituting the capstan device body.

The rotor R of the electric motor M is shrinked on a suitably tapered section of shaft 24, as shown in Figure 2. A small pulley 50 is keyed onto that end of shaft 24 which protrudes from the rotor R, and by means of belts 51 the said pulley is connected to a speedometer dynamo 52 which by its own brackets is fixed in bores 53 suitably provided in the areas in which the extended parts A' and B' are fastened together.

A collar 54 is fitted on the free end of parts A' and B', and a crosspiece 55 is diametrically attached thereon, and supports the electric fan 56 being arranged in a coaxial relation with shaft 24, and being protected by a bell 57 which is provided with a grid-like screen at its end side, and is secured by means of screws to the said collar 54. The electric fan is automatically controlled by a not shown thermostat that detects the temperature of the stator of the electric motor, the whole in such a manner that is conceivable and easily practicable by those skilled in the art.

From the drawings to which reference is made, there appears that the pieces A, A' and B, B' are suitably formed with inner and outer ribs for mechanically strengthening and also for increasing the surface of said pieces which is in contact with air, and is cooled thereby.

## Claims

1. A geared motor particularly adapted for use in a capstan device for lifts or elevators, comprising a speed reducer of the worm screw (25) and worm wheel (4) type, an electric motor for driving the said worm screw, and a fan (56) for supplying cooling air to longitudinal ducts (45) arranged concentrically to the stator (S) of the said electric motor
characterized in that
- the speed reducer body is formed by two pieces (A, B) which are matingly joined to each other along an ideal vertical plane containing the axis of the worm screw (25), the said pieces being integrally provided with opposed extensions (A', B') which are also set in mating relation along the said ideal vertical plane and between which the stator (S) of the electric motor is clamped;
- the said longitudinal ducts (45) are formed around the said stator (S), the said fan (56) being mounted at the free end side of the said extensions (A',B'), while grille openings (46, 47) for the outflow of the cooling air are provided in the lateral portions of the opposite end side of said extensions;
- the said pieces (A, B) forming the body are provided integrally on their underside with coplanarly arranged connection members (100) to be fastened to any suitable supporting frame (200, 300).

2. The geared motor according to claim 1, characterized in that the fan (56) is controlled by at least one thermostat that detects the temperature of the stator (S) of the electric motor (M) driving the speed reducer.

3. The geared motor according to Claim 1, characterized in that when the geared motor is used in a capstan device, the electric cables for feeding the electric motor, and the electric cables connected to the thermostat/motor-cooling electric fan unit, are led out through bores in the upper portion of the closed end side of both of the extended parts (A', B') between which also the stator of the said electric motor is clamped, and are sheathed in tubes (48, 148) being caused to abut against a box (44) which is arranged in a fixed position on the top of the speed reducer body (A, B), and which preferably performs the function of support for the electromagnets (43, 143) that actuate the normally engaged brake means being caused to act upon the flywheel (38) keyed onto the high speed-operated shaft (24) which is fitted with the worm screw (25), and on which the rotor (R) of the said electric motor is preferably shrinked, the terminal boards for the said electromagnets, the electric motor, and the relative fittings to be fed with electric current, being housed in the said box (44).

4. The geared motor according to Claim 1, characterized in that the two pieces (A, B) forming the body of the speed reducer, have their inward sides formed with preferably opposed projecting members (21, 121) of one piece therewith or inserted, which are properly planed relative to the edges of the said pieces, by which these pieces are matingly joined and fastened to each other, in such a manner that the helichelical gear being preferably axially locked to the slow-speed operated shaft (2) of the speed reducer, whereby the said shaft can be assembled even without the provision of axially retaining means, and the assembly and disassembly of this shaft and of the members being associated therewith, is thus simplified.

5. The geared motor according to Claim 4, characterized in that the said opposed projecting members (21, 121) which are each caused to cooperate with the respective side of that portion of the helical gear (4) which comes to be in mesh with the relative worm screw (25), are each formed in their uppermost portion with a respective recess (400) for collection of the lubricating oil being transferred thereinto by the helical gear which closes the said recesses, this in order to ensure a sufficient lubrication of the said helical gear even when the same is again set in operation after a long time of rest.

6. The geared motor according to Claim 4, characterized in that the hub (3) of the helical gear (4) is keyed onto the slow speed-operated shaft (2) of the speed reducer, and by one of its peripheral edges this hub is held in an abutting relation with a step formed in the said shaft, by a spacer (6) which is caused to bear against the inward peripheral edge of the inner ring of one (the 7) of the bearings supporting the said slow speed-operated shaft, the said inner ring being in turn caused to bear by its outward peripheral edge against a ring (9) which is fitted with an annular packing (10) for tightly sealing the shaft (2), and is sealed by an annular packing (11) provided in the housing (8) in which the said bearing (7) is seated, and the hub (113) of the drawing pulley (13) in the capstan device is caused to bear against the outer peripheral edge of said ring (9), the said hub being keyed onto the slow speed-operated shaft (2) and being axially held thereon by an external disk (15) and by an axially threaded hub-locking screw (16).

7. The geared motor according to Claim 1, characterized in that the worm screw (25) is formed of one piece with the shaft (24) onto which the rotor of the electric motor is keyed, the said shaft being rotatably supported by a pair of bushings (26, 126) made of a low friction material, which are lubricated by gravity through gutter-like members (29, 129) into which some of the lubricant being transferred by a splashing action from the worm/screw/helical gear unit, is caused to flow, and which will deliver the oil having been collected therein, into the annular recesses (27, 127) encompassing the said bushings, which in turn are provided with bores (30, 130) for conveying oil into the scores formed in the bushing inner surfaces by which the said bushings are caused to cooperate with the said shaft, and this shaft is provided at its end on which the flywheel (38) is fitted, with a pair of thrust bearings (35) which are enclosed in a cup-shaped member (131) which by means of screws is secured to the speed reducer body (A, B).

## Patentansprüche

1. Getriebemotor, insbesondere zur Verwendung in einer Windvorrichtung für Lifte und Aufzüge angepaßt, bestehend aus einem Drehzahlminderer aus einer Schnecke (25) und einem Schneckenrad (4), einem Elektromotor zum Antrieb der besagten Schnecke und einem Ventilator (56) zur Versorgung der kon-zentrisch um den Stator (S) des besagten Elektromotors angeord-neten, längsverlaufenden Durchführungen (45) mit Kühlluft, dadurch gekennzeichnet, daß das Drehzahlminderergehäuse aus zwei Teilen (A,B) aufgebaut ist, die passend zueinander längs einer idealen vertikalen Ebene miteinander verbunden sind, die die Achse der Schnecke (25) enthält, daß die besagten Teile mit integrierten, sich gegenüberliegenden Erweiterungen (A',B') ausgestattet sind, die ebenso entlang der idealen Ebene passend zusammengefügt sind und zwischen denen der Stator (S) des Eiektromotors eingespannt ist, daß die besagten längsverlaufenden Durchführungen (45) um den besagten Stator (S) herum ausgebildet sind, der besagte Ventilator (56) auf der freien Seite der besagten Erweiterungen (A',B') angebracht ist, während auf der entgegengesetzten Seite in Seitenbereichen der besagten Erweiterungen gitterförmige Öffnungen (46,47) zum Auslaß der Kühlluft vorgesehen sind und daß die besagten, das Gehäuse bildenden Teile (A,B) an ihrer Unterseite, zur Befestigung an jeden geeigneten Trag-rahmen (200,300), mit integrierten, koplanar angeordneten Verbindungselementen (100) ausgestattet sind.

2. Getriebemotor gemäß Anspruch 1, dadurch gekennzeichnet, daß der Ventilator (56) mindestens von einem Thermostaten gesteuert wird, der die Temperatur des Stators (S) des den Drehzahlmin-derer antreibenden Elektromotors (M) aufnimmt.

3. Getriebemotor gemaß Anspruch 1, dadurch gekennzeichnet, daß, wenn der Getriebemotor in einer Windvorrichtung eingesetzt wird, die elektrischen Kabel zur Versorgung des Elektromotors und die elektrischen Kabel zum Anschluß der Thermostat/elek-trischen Motorkühlventilatoren-Einheit durch Bohrungen in dem oberen Bereich der geschlossenen Seitenteile beider Erweiterungen (A',B'), zwischen denen zusätzlich der Stator des besagten Elektromotors eingespannt ist, herausgeführt und von Rohren (48,148) umhüllt sind, die an ein Gehäuse (44) angrenzen, das in einer ortsfesten Position oben auf dem Drehzahlmindererge-häuse (A,B) befestigt ist und welches vorzugsweise die Funktion der Lagerung der Elektromagneten (43,143) übernimmt, die die normalerweise angezogenen Bremsmittel betätigen, die auf ein Schwungrad (38) einwirken, das auf der schnelldrehenden Welle (24) befestigt ist, die mit der Schnecke (25) verbunden ist und auf der der Rotor R des besagten Elektromotors vorzugsweise aufgeschrumpft ist und daß die Klemmenplatten für besagte Elek-tromagneten, der Elektromotor und die jeweils mit elektrischem Strom zu versorgenden Installationen in besagtem Gehäuse (44) untergebracht sind.

4. Getriebemotor gemäß Anspruch 1, dadurch gekennzeichnet, daß die beiden, das Gehäuse des Drehzahlminderers bildenden Teile (A,B) an ihre Innenseiten mit vorzugsweise damit einstückigen oder eingesetzten, sich gegenüberliegend vorspringenden Teilen (21,121) ausgestattet sind, die relativ zu den Rändern der be-sagten Teile exakt geplant sind, an denen diese Teile passend zueinander zusammengefügt und so miteinander verbunden sind, daß das Schneckenrad auf der langsamdrehenden Welle (2) des Drehzahlminderers vorzugsweise axial festgelegt ist, durch die besagte Welle sogar ohne axiale Siche-rungsmittel montiert sein kann, und daß die Montage und die Demontage der Welle und der mit ihr verbundenen Teile auf diese Weise vereinfacht ist.

5. etriebemotor gemäß Anspruch 4, dadurch gekennzeichnet, daß die besagten vorspringenden Teile (21,121), die mit demjenigen Bereich der jeweiligen Seite des Schneckenrades (4) zu-sammenwirken, der mit der Schnecke (25) in Eingriff kommt, jedes in seinem oberen Bereich mit einer jeweiligen Ausnehmung (400) zum Auffangen von Schmieröl ausgestattet ist, welches vom Schneckenrad dorthin transportiert wird, das die besagte Ausnehmung verschließt, um eine ausreichende Schmierung des besagten Schneckenrades sicherzustellen, selbst wenn dieses nach einer langen Ruhepause wieder in Be-trieb genommen wird.

6. Geriebemotor gemäß Anspruch 4, dadurch gekennzeichent, daß die Nabe (3) des Schneckenrades (4) auf der langsamdre-henden Welle (2) des Drehzahlminderers befestigt ist, und diese Nabe mit einem ihrer seitlichen Ränder durch einen Ab-standshalter (6) an einem an der besagten Welle angeformten Absatz abgestützt ist, wobei der Ab-standshalter sich gegen den Innenrand des Innenringes eines der Lager (die 7) abstützt, die die langsamdrehende Welle lagern, wobei sich besagter Innenring über seinen äußeren Rand gegen einen Ring (9) abstutzt, der mit einer Ringdichtung (10) zur dichten Abdichtung der Welle (2) ausgerüstet ist, und der durch eine Ringdichtung (11), die im Lagersitz (8), in dem das be-sagte Lager (7) angeordnet ist, abgedichtet ist, und daß die Nabe (113) der Riemenscheibe (13) der Windvorrichtung sich gegen den äußeren Rand des besagten Rings (9) abstützt, wobei besagte Nabe auf der langsamdrehenden Welle (2) befestigt und durch eine äußere Scheibe (15) und eine axial eingeschraubte Nabenbe-festigungsschraube (16) axial festgelegt ist.

7. Getriebemotor gemäß Anspruch 1, dadurch gekennzeichnet, daß die Schnecke (25) mit der Welle (24), auf der der Rotor des Elektromotors festgelegt ist, einstückig ausgebildet ist, wo-bei besagte Welle durch ein Paar Buchsen (26,126) aus Material mit geringem Reibwert drehbar gelagert ist, die über rinnenför-mige Teile (29,129) durch Gravitation geschmiert werden, in die durch Spritzvorgängen der Schnecken-Schneckenrad-Gebriebeeinheit etwas von dem Schmiermittel hinein gelangt, die das darin gesammelte Öl in die die besagten Buchsen umschließenden Ringausnehmungen (27,127) leiten, die selbst mit Bohrungen (30, 130) versehen sind, um das Öl den in den inneren Oberflächen der Buchsen, über die die besagten Buchsen mit der besagten Welle zusammenwirken, vorgesehenen Rillen zuzuführen und daß diese Welle an der Seite, auf der das Schwungrad (38) befestigt ist, mit einem Paar Axialdrucklagern (35) ausgestattet ist, die von einem tassenförmigen Teil (131) umgeben sind, welches durch Schrauben an dem Drehzahlminderergehäuse (A,B) befestigt ist.

## Revendications

1. Moto-réducteur spécialement adapté pour être utilisé dans un dispositif de treuil pour ascenseur ou élévateur, comprenant un réducteur de vitesse du type à vis sans fin (25) et du type à roue à vis sans fin (4), un moteur électrique pour entraîner la vis sans fin, et un ventilateur (56) pour envoyer de l'air de refroidissement dans des conduits (45) longitudinaux disposés concentriquement au stator (S) du moteur électrique caractérisé en ce que
- le corps du réducteur de vitesse est formé de deux parties (A, B) qui sont assemblées en s'adaptant l'une à l'autre le long d'un plan vertical idéal passant par l'axe de la vis (25) sans fin, ces parties étant munies de prolongements (A', B') opposés d'une pièce avec elle qui s'adaptent également le long du plan vertical idéal et entre lesquels le stator (S) du moteur électrique est serré ;
- les conduits (45) longitudinaux sont placés autour du stator (S), le ventilateur (56) étant monté du côté de l'extrémité libre des prolongements (A', B'), tandis que des ouvertures (46, 47) en forme de grille permettant l'écoulement vers l'extérieur de l'air refroidissant sont ménagées dans les parties latérales du côté de l'extrémité opposé des prolongements ;
- les parties (A, B) formant le corps sont munies, d'une pièce avec elle, sur leur face inférieure d'éléments (100) de connexion disposés co-planairement, destinés à être fixés à tout cadre (200, 300) de palier approprié.

2. Moto-réducteur selon la revendication 1, caractérisé en ce que le ventilateur (56) est commandé par au moins un thermostat qui repère la température du stator (S) du moteur (M) électrique qui entraîne le réducteur de vitesse.

3. Moto-réducteur selon la revendication 1, caractérisé en ce que lorsque le moto-réducteur est utilisé dans un dispositif de treuil, les câbles électriques pour alimenter le moteur électrique et les câbles électriques reliés à l'unité de ventilation électrique du thermostat/dispositif de refroidissement du moteur, sont amenés par des trous dans la partie supérieure du côté de l'extrémité fermée des deux prolongements (A', B') entre lesquels le stator du moteur électrique est serré, et sont gainés dans des tubes (48, 148) qui viennent buter sur une boîte (44) qui est placée dans une position immobile sur le dessus du corps (A, B) du réducteur de vitesse, et qui, de préférence, réalise la fonction de palier pour les électro-aimants (43, 143), qui commandent les moyens de freinage normalement embrayés, pour les faire agir sur le volant (38) calée sur l'arbre (24) qui tourne à haute vitesse et qui est muni de la vis (25) sans fin, et sur lequel le rotor (R) du moteur électrique est de préférence restreint, les planches à bornes des électro-aimants, le moteur électrique, et les différents raccords devant être alimentés en courant électrique étant logés dans le boîtier (44).

4. Moto-réducteur selon la revendication 1, caractérisé en ce que les deux parties (A, B) formant le corps du réducteur de vitesse, ont leurs côtés intérieurs formés par des éléments faisant saillies, (21, 121) de préférence opposés ne formant qu'une pièce avec eux ou étant rapportés, qui sont aplanis de manière appropriée par rapport aux bords des parties, par lesquels ces parties sont assemblées en s'adaptant et fixées l'une à l'autre, d'une manière telle que l'engrenage hélicoïdal est de préférence verrouillée axialement à l'arbre (2) qui tourne à vitesse lente du réducteur de vitesse, cet arbre pouvant être monté même sans l'utilisation de moyens de retenue axiaux, simplifiant ainsi le montage et le démontage de cet arbre et des éléments qui lui sont associes.

5. Moto-réducteur selon la revendication 4, caractérisé en ce que les éléments (21, 121) opposés faisant saillie que l'on fait chacun coopérer avec le côté respectif de cette partie de la roue (4) hélicoïdale qui engrène avec la vis (25) sans fin correspondante, ont chacun sur leur partie la plus élevée un évidemment (400) respectif pour recueillir l'huile de lubrification qui y est transférée par l'engrenage hélicoïdal qui ferme les dits évidements, afin d'assurer une lubrification suffisante de l'engrenage hélicoïdal même si celui-ci est remis en route après un long moment de repos.

6. Moto-réducteur selon la revendication 4, caractérisé en ce que le moyeu (3) de la roue (4) hélicoïdale est calé sur l'arbre (2) qui tourne à vitesse lente du réducteur de vitesse, et ce moyeu, par l'un de ses bords périphériques, est maintenu en butée avec un épaulement formé dans l'arbre par une entretoise (6) qui vient porter sur le bord périphérique intérieur de la bague intérieure de l'un (du 7) des paliers qui portent l'arbre tournant à vitesse lente, la bague intérieure portant à son tour par son bord périphérique extérieur sur une bague (9) qui est munie d'une garniture d'étanchéité (10) annulaire destinée à bien assurer l'étanchéité de l'arbre (2), et est rendue étanche par une garniture d'étanchéité (11) annulaire qui se trouve dans le logement (8) dans lequel les paliers (7) sont placés, et le moyeu (113) de la poulie (13) de traction du dispositif de treuil vient porter sur le bord périphérique extérieure de la dite bague (9), le moyeu étant calé sur l'arbre (2) tournant à vitesse lente et y étant maintenu axialement par un disque (15) extérieur et par une vis (16) de verrouillage de moyeu filetée axialement.

7. Moto-réducteur selon la revendication 1, caractérisé en ce que la vis (25) sans fin forme une seule pièce avec l'arbre (24) sur lequel le rotor du moteur électrique est calé, l'arbre étant supporté de manière à pouvoir tourner par une paire de coussinets (26, 126) en un matériau à faible coefficient de frottement, qui sont lubrifiés par gravité par l'intermédiaire d'éléments (29, 129) en forme de goulotte dans lesquels une partie du lubrifiant qui provient de l'unité roue hélicoïdale-vis sans fin-roue hélicoïdale à la suite d'une éclaboussure, est amenée à s'écouler laissant ainsi l'huile qui y a été recueillie à l'intérieur s'écouler dans les évidements (27, 127) annulaires enfermant les coussinets qui à leur tour sont munies de trous (30, 130) permettant d'envoyer l'huile dans les encoches formées sur les faces intérieures des coussinets par lesquelles les coussinets coopèrent avec l'arbre, et cet arbre est muni au bout où le volant (38) est monté d'une paire de paliers (35) de butée qui sont enfermés dans un élément (131) en forme de coupelle fixée, au moyen de vis, solidement au corps (A, B) du réducteur de vitesse.
